# DEMANDE DE BREVET EUROPEEN

(11) **EP 3 598 205 A1**
(43) Date de publication de la demande: **22.01.2020**
(21) Numéro de dépôt: 19180575.3
(22) Date de dépôt: 17.06.2019
(51) Int. Cl.: G02C 5/14, G02C 1/06

(54) **MONTURE DE LUNETTES A ELEMENT INSERE LATERALEMENT**

(30) Priorité: 19.06.2018 FR 1855409
(71) Demandeur: Minima, 91310 Linas (FR)
(72) Inventeur: PERIE, Jean-Claude, 82000 MONTAUBAN (FR)
(74) Mandataire: Lavialle, Bruno François Stéphane

(57) **Abrégé**

L'invention concerne une monture de lunettes comprenant une partie frontale (3) portant au moins un verre (2), la monture comprenant par ailleurs au moins un élément de lunettes qui est monté sur la partie frontale. Selon l'invention, l'élément de lunettes est monté sur la partie frontale par insertion de l'élément de lunettes dans un logement de la partie frontale selon un sens d'introduction parallèle au verre, le verre assurant un blocage de l'élément de lunettes dans la partie frontale.

## Description

La présente invention concerne une monture de lunettes à élément inséré latéralement.

### ARRIERE-PLAN TECHNOLOGIQUE DE L'INVENTION

Une monture de lunettes comporte généralement des tenons dont sont solidaires des branches. Les tenons comportent une première portion d'extrémité fixée à une partie frontale de la monture et une deuxième portion d'extrémité opposée, dans le prolongement de laquelle s'étend la branche.

Les deux portions d'extrémité du tenon sont généralement articulées l'une à l'autre par une charnière permettant le pivotement de la branche entre une position de rangement dans laquelle la branche s'étend parallèlement au verre et une position d'utilisation dans laquelle la branche s'étend perpendiculairement au verre. Il existe des montures dans laquelle la branche est d'une seule pièce avec la deuxième portion d'extrémité, la liaison de la branche au tenon se faisant au niveau de la charnière, et des montures dans lesquelles la branche est rapportée sur la deuxième portion.

Classiquement, la première portion d'extrémité du tenon est emmanchée à force dans un logement de la partie frontale de la monture selon un sens d'introduction perpendiculaire au verre. De la sorte, le tenon se retrouve solidarisé à la monture au niveau d'une de ses faces principales.

L'inconvénient est qu'il est alors très difficile voire impossible de retirer le tenon de la monture.

Or, avec le temps, les lunettes ont été peu à peu débarrassées de leur seule image de prothèse optique pour revêtir également celle d'un accessoire de mode à part entière dont on attend qu'il habille le visage de leur porteur. En parallèle s'est développée une offre très importante de formes et de couleurs de lunettes.

Ainsi, le montage par force du tenon n'est plus en adéquation avec un besoin de changement rapide des différents éléments d'une paire de lunettes si l'un d'entre eux ne convenait pas.

### BUT DE L'INVENTION

Un but de l'invention est de proposer une monture de lunettes plus aisément démontable.

### BREVE DESCRIPTION DE L'INVENTION

A cet effet, on prévoit, une monture de lunettes comprenant une partie frontale portant au moins un verre, la monture comprenant par ailleurs au moins un élément de lunettes qui est monté sur la partie frontale, la monture étant caractérisée en ce que l'élément de lunettes est monté sur la partie frontale par insertion de l'élément de lunettes dans un logement de la partie frontale selon un sens d'introduction parallèle au verre, le verre assurant un blocage de l'élément de lunettes dans la partie frontale.

De la sorte, l'élément de lunettes est monté sur la partie frontale non plus au niveau de sa face principale arrière mais sur les côtés (côtés internes au niveau du pontet ou côtés externes au niveau des branches). L'élément de lunette est ainsi inséré dans l'épaisseur de la partie frontale entre l'extérieur de la monture et son drageoir.

Il s'avère donc plus aisé de désolidariser l'élément de lunettes de la partie frontale en particulier du fait que la zone d'insertion de l'élément de lunettes est moins visible que dans l'art antérieur avec la fixation au niveau de la face principale arrière de la partie frontale et que l'élément de lunettes n'est pas emmanché à force dans la partie frontale. Par ailleurs, en enlevant simplement le verre de lunettes il est possible de désolidariser l'élément de lunettes de la partie frontale.

Optionnellement, le logement est agencé de sorte que l'élément de lunettes s'étende hors de la zone d'attache des verres au drageoir.

Ainsi, l'élément de lunettes ne s'étend pas ou peu dans le drageoir ce qui lui évite d'abimer les verres.

Optionnellement, l'élément de lunettes est inséré uniquement par emboîtement dans le logement et bloqué par le verre.

On note que le montage de l'élément de lunettes est ainsi simplifié et ne nécessite aucun outil ou système mécanique. Tout peut être réalisé par emboîtement, le verre assurant le blocage de l'ensemble.

Optionnellement l'élément de lunettes est un tenon.

Optionnellement une portion de l'élément de lunettes est conformée pour recevoir un pion de blocage de la portion dans le logement.

Optionnellement une portion de l'élément de lunettes est conformée en un crochet.

Optionnellement le crochet forme un peigne avec au moins une dent.

Optionnellement le crochet est agencé en partie seulement dans le logement.

Optionnellement le crochet est agencé de sorte à s'étendre dans un plan horizontal lorsque le crochet est placé dans le logement.

Optionnellement une portion de l'élément de lunettes comporte un trou la traversant pour l'insertion du pion de blocage à travers elle.

Optionnellement une portion de l'élément de lunettes est conformée en languette.

Optionnellement le pion s'étend sensiblement perpendiculairement à une portion de l'élément de lunettes le recevant.

Optionnellement une portion de l'élément de lunettes est conformée pour être bloquée dans la partie frontale sans pion de blocage.

Optionnellement une portion de l'élément de lunettes est conformée en un coude.

Optionnellement l'élément de lunettes est conformé pour être monté par l'extérieur de la partie frontale.

Optionnellement l'élément de lunettes est conformé pour être monté par l'intérieur de la partie frontale.

Optionnellement, l'élément de lunettes est un pontet et/ou un porte-plaquettes.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :
- la figure 1 est une vue en perspective d'une paire de lunettes équipée d'une monture conforme à un premier mode de réalisation de l'invention,
- les figures 2a, 2b et 2c sont respectivement une vue d'un tenon et d'une branche associée, d'un pion et d'une vue en coupe d'une portion de la partie frontale de la monture illustrée à la figure 1,
- les figures 3a, 3b et 3c illustrent les différentes étapes de montage du tenon et du pion dans la portion illustrée à la figure 2c,
- les figures 4a et 4b illustrent les différentes étapes de montage d'une première variante du premier mode de réalisation,
- les figures 5a et 5b représentent respectivement une vue en perspective et en coupe d'une portion d'une monture selon une deuxième variante du premier mode de réalisation,
- la figure 6 illustre une troisième variante du premier mode de réalisation,
- les figures 7 et 8 illustrent respectivement une quatrième variante et une cinquième variante du premier mode de réalisation,
- les figures 9a et 9b illustrent les différentes étapes de montage d'une sixième variante du premier mode de réalisation,
- les figures 10a et 10b illustrent les différentes étapes de montage d'une septième variante du premier mode de réalisation,
- la figure 11 illustre une huitième variante du premier mode de réalisation,
- les figures 12a et 12b illustrent une portion d'une partie frontale d'une monture selon un deuxième mode de réalisation de l'invention, respectivement avant et après montage du tenon dans la partie frontale,
- la figure 13a illustre une première variante du deuxième mode de réalisation de l'invention,
- les figures 13b et 13c représente respectivement une vue en perspective et en coupe d'une portion d'une partie frontale de la monture illustrée à la figure 13a,
- les figures 14a et 14b illustrent une deuxième variante du deuxième mode de réalisation, respectivement avant et après montage du tenon dans la partie frontale,
- la figure 14c est une vue de côté de la figure 14b,
- la figure 14d est une vue analogue à la figure 14c montrant une version alternative de la deuxième variante du deuxième mode de réalisation,
- les figures 15a et 15b sont des vues partielles en perspective qui illustrent une troisième variante du deuxième mode de réalisation, respectivement avant et après montage du tenon dans la partie frontale,
- la figure 15c est une vue en perspective d'une variante du tenon illustré aux figures 15a et 15b,
- les figures 16a et 16b représentent respectivement une vue en perspective et en coupe d'une portion d'une partie frontale d'une monture selon une première variante d'un troisième mode de réalisation de l'invention,
- les figures 17a et 17b représentent respectivement une vue en perspective et en coupe d'une portion d'une partie frontale d'une monture selon une deuxième variante d'un troisième mode de réalisation de l'invention,
- les figures 18a et 18b représentent respectivement une vue en perspective et en coupe d'une portion d'une partie frontale d'une monture selon une troisième variante d'un troisième mode de réalisation de l'invention,
- les figures 19a à 19c illustre une portion d'une partie frontale d'une monture selon une quatrième variante d'un troisième mode de réalisation de l'invention, lors des différentes étapes de montage du pontet de ladite monture.

### DESCRIPTION DETAILLEE DE L'INVENTION

En référence aux différentes figures, il est visible une paire de lunettes comprenant deux verres 2 équipés d'une monture 1. La monture 1 comprend une partie frontale 3 reliant les deux verres 2 l'un à l'autre.

On peut ainsi définir une face arrière 6 et une face avant 5 à la partie frontale 3 correspondant respectivement à la face tournée vers le visage du porteur de la paire de lunettes et la face opposée. Lesdites faces 5, 6 sont encadrées par un bord supérieur 7 et un bord inférieur 8 ainsi qu'un bord latéral droit 9 (encore appelé côté externe droit) et un bord latéral gauche 10 (encore appelé côté externe gauche).

Par ailleurs, la monture 1 comporte deux ensembles latéraux 4.A, 4.B reliés respectivement au bord latéral droit et au bord latéral gauche.

Les ensembles latéraux 4.A et 4.B ont une structure identique sauf en ce que l'un est le symétrique de l'autre par rapport à un plan médian de la paire de lunettes. Dans la suite de la description, ne sera mentionné qu'un ensemble 4 renvoyant indifféremment à l'un ou l'autre ensemble latéral 4A, 4B. Les pièces composant chacun des ensembles 4A et 4B porteront la même référence numérique.

Chaque ensemble latéral 4 comprend une première pièce et une deuxième pièce reliées l'une à l'autre. Dans les modes de réalisation décrits, la première pièce est un tenon 11 et la deuxième pièce est une branche 30.

Le tenon 11 comporte une première partie 12 et une deuxième partie 13 reliées par une charnière 14 comportant un axe d'articulation solidaire de la première partie 12 et permettant ainsi le pivotement de la branche 30 entre une position de rangement dans laquelle la branche 30 s'étend parallèlement au verre 2 et une position d'utilisation dans laquelle la branche 30 s'étend perpendiculairement au verre 2. La branche 30 est ici d'une seule pièce avec la deuxième partie 13, la liaison de la branche 30 au tenon 11 se faisant au niveau de la charnière 14. La première partie 12 est par exemple coudée et comporte ainsi une première portion 12a s'étendant selon une direction X sensiblement parallèlement au verre 2 et une deuxième portion 12b s'étendant selon une direction Y sensiblement perpendiculaire au verre 2 (en direction des oreilles lorsque la paire de lunettes est portée), les directions X et Y étant ainsi orthogonales. L'extrémité libre de la deuxième portion 12b porte l'axe d'articulation de la charnière 14.

En variante la branche 30 est rapportée sur la deuxième portion 12b. En variante encore la branche 30 et le tenon 11 sont d'une seule pièce. Il n'y a alors pas de charnière permettant de rabattre la branche 30. En variante, ladite pièce formant conjointement branche et tenon est suffisamment souple pour assurer de manière intrinsèque la fonction charnière.

La première partie 12 comporte par ailleurs des moyens de sa fixation à la partie frontale 3 qui sont ici portés par l'extrémité libre de la première partie 12.

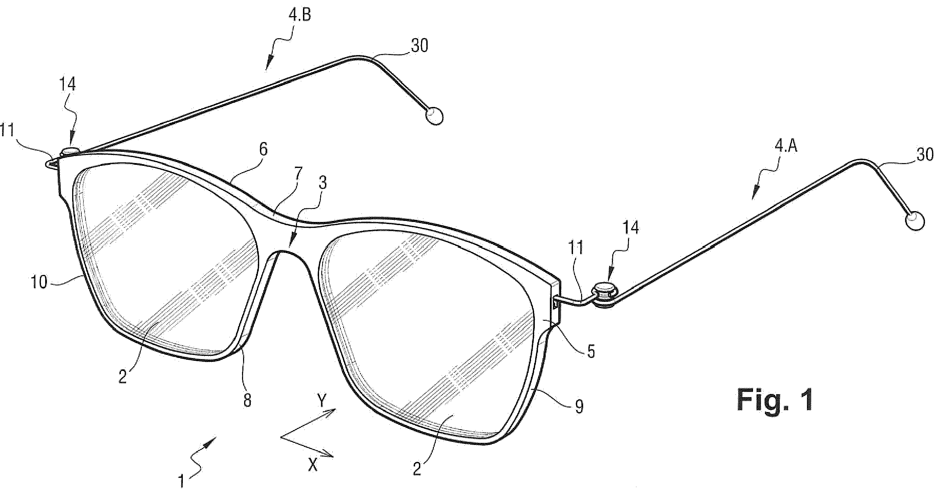

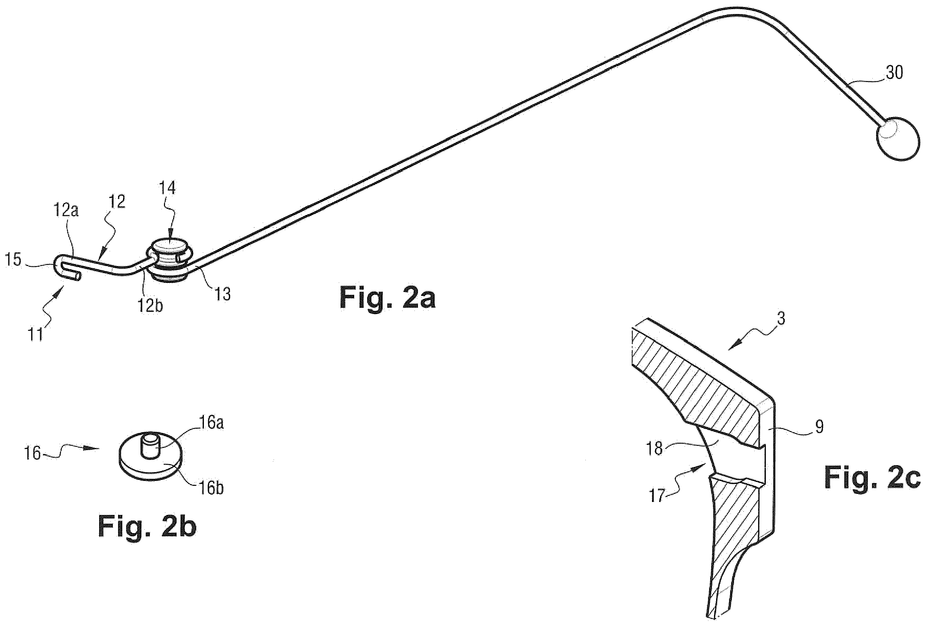

En référence plus particulièrement aux figures 1, 2a, 2b et 2c, 3a, 3b et 3c et selon un premier mode de réalisation de l'invention, l'extrémité libre est conformée en un crochet 15 apte à coopérer avec un pion 16 de la monture 1 pour le blocage du tenon 11 dans la partie frontale 3. Typiquement l'extrémité libre est conformée en U comme illustré à la figure 2a. Le crochet 15 comporte ainsi une portion d'attache 15a à la première partie 12 prolongée d'une jambe 15c reliée à la portion d'attache 15a par un retour 15b. Le retour 15b est ici arrondi.

En référence à la figure 2b, le pion 16 comporte une tige 16a prolongée d'une tête de blocage 16b.

De manière correspondante, et comme visible à la figure 2c, un logement 17 est ménagé dans le côté externe 9 de la partie frontale 3 en extrémité supérieure dudit côté. Le logement 17 est ainsi ménagé pour s'étendre depuis l'extérieur de la monture 1 jusqu'à déboucher dans le drageoir (drageoir dans lequel est emboîté le verre 2 associé) de manière à être débouchant à ses deux extrémités. Le logement 17 s'étend sensiblement parallèlement au verre 2 selon la direction X. Lorsque les lunettes sont portées, le logement 17 s'étend ainsi sensiblement à l'horizontal.

Le logement 17 est par ailleurs conformé pour accueillir le crochet 15. Par exemple le logement 17 présente une section en ovale, rectangulaire, oblongue ... (section de normale la direction X) afin de pouvoir accueillir tout le crochet 15. Typiquement, le logement 17 est tel que le crochet 15 logé dans le logement 17 s'étend à la verticale (lorsque les lunettes sont portées) i.e. la jambe 15c s'étend sous la portion d'attache 15a, le crochet 15 s'étendant par ailleurs selon la direction X.

Afin d'autoriser le blocage du crochet 15 dans le logement 17, le logement 17 comporte à la lisière du drageoir un renfoncement 18 apte à loger la tête 16b du pion 16. Le renfoncement 18 s'étend ici sensiblement selon la direction Y. Typiquement le renfoncement 18 présente au moins une portion de section circulaire, semi-circulaire, elliptique, semi-elliptique, oblongue, semi-oblongue ... (section de normale la direction Y).

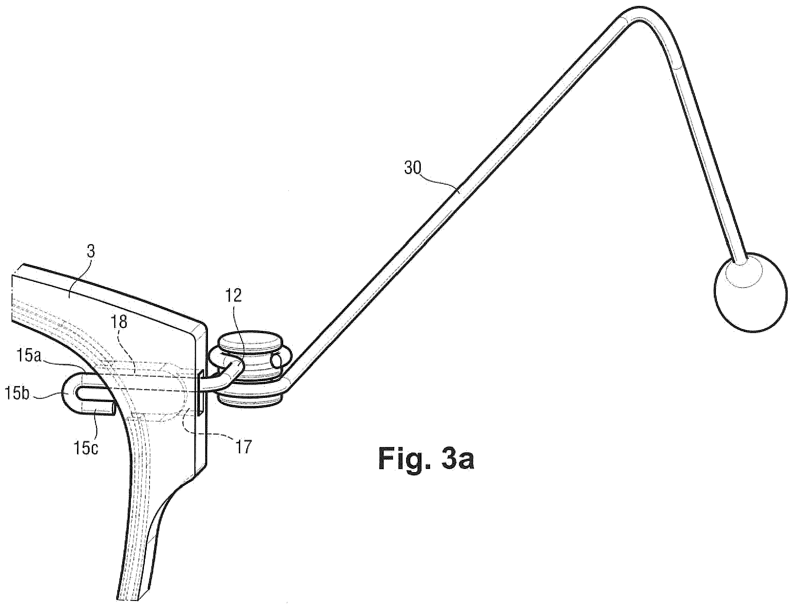

De la sorte, comme illustré à la figure 3a, avant le montage du verre, on vient insérer le crochet 15 dans le logement 17 depuis l'extérieur de la partie frontale 3 vers l'intérieur de la partie frontale 3.

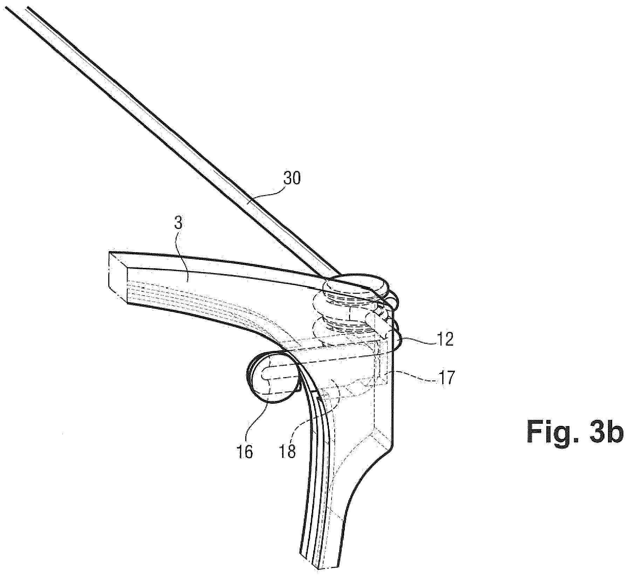

En référence à la figure 3b, une fois le retour 15b du crochet 15 hors du logement 17 et dans l'emplacement du verre 2 on vient positionner le pion 16 dans ledit retour. Le pion 16 s'étend donc à travers le crochet 15, transversalement audit crochet 15 (soit sensiblement parallèlement à la direction Y). On tire alors sur le tenon 11 pour ramener ledit retour 15b dans le logement 17, entraînant en même temps le pion 16 dont la tête 16b va venir en butée dans le renforcement 18 au niveau de la frontière avec le reste du logement 17 plus étroit empêchant ainsi le crochet 15 de ressortir du logement par l'extérieur.

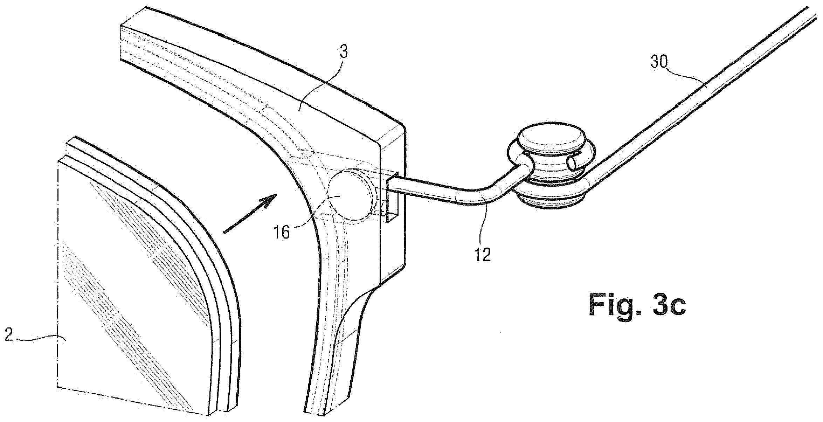

Enfin on vient monter le verre 2 dans le drageoir, comme illustré à la figure 3c, verrouillant le crochet 15 dans la partie frontale 3, le verre 2 empêchant notamment le crochet 15 de ressortir du logement par l'intérieur.

De la sorte, le tenon 11 est monté dans la partie frontale 3 par insertion du tenon dans le logement 17 selon un sens d'introduction parallèle au verre 2 (la direction X). D'ailleurs, l'extrémité libre d'attache du tenon 11 à la partie frontale 3 s'étend elle-même également parallèlement au verre 2.

Le montage du tenon 11 est ainsi simple et rapide. En outre, ce montage est réversible puisqu'il suffit de démonter le verre 2 pour faire ressortir le crochet 15 du logement 17.

Bien entendu différentes variantes au premier mode de réalisation sont envisageables.

Par exemple on peut agencer la première partie 12 et le pion 16 autrement. Ainsi bien qu'ici la première partie 12 soit agencé verticalement et le pion 16 horizontalement, il est possible d'agencer la première partie 12 horizontalement et le pion 16 verticalement en adaptant le logement en conséquence (et son renfoncement).

Le logement 17 peut être orienté différemment. Ainsi, bien qu'ici le logement 17 soit agencé à l'horizontal, le logement 17 peut être agencé à la verticale. De la même manière, bien que le crochet 15 s'étende ici dans un plan vertical, le crochet 15 pourra s'étendre dans un plan horizontal i.e. la jambe 15c et la portion d'attache 15a sensiblement au même niveau s'étendant parallèlement à la direction X.

De la même manière, bien qu'ici le crochet 15 soit entièrement logé dans le logement 17, le crochet 15 pourra s'étendre en partie seulement dans le logement 17.

En outre, bien qu'ici le crochet 15 soit toujours associé à un pion 16, le crochet 15 pourra être conformé pour pouvoir être utilisé seul, le blocage du verre étant alors suffisant pour bloquer l'ensemble.

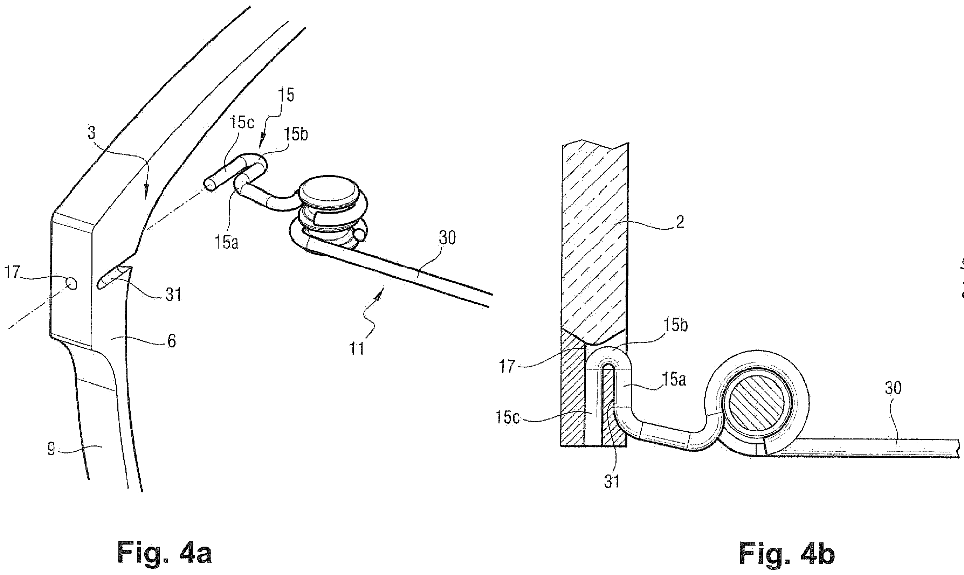

Ainsi, selon une première variante et comme illustré aux figures 4a et 4b, seule la jambe 15c est insérée dans le logement 17.

Le retour 15b entoure alors le bord latéral 9. La figure 4b illustre que le retour 15b entoure la face interne du bord latéral 9 mais alternativement le retour 15b pourra entourer la face externe du bord latéral 9.

Optionnellement, la portion d'attache 15a s'étend le long d'une face avant ou arrière de la partie frontale 3.

En remplacement et de préférence, la portion d'attache 15a s'étend dans une rainure 31 ménagée le long d'une face avant ou arrière de la partie frontale 3.

La portion d'attache 15a dépasse ou non en largeur et/ou en longueur de la rainure 31.

On note qu'alors le crochet 15 s'étend dans un plan horizontal i.e. la jambe 15c et la portion d'attache 15a s'étendant sensiblement au même niveau parallèlement à la direction X.

La rainure 31 est ainsi ménagée pour déboucher dans le drageoir (drageoir dans lequel est emboîté le verre 2 associé). La rainure 31 s'étend sensiblement parallèlement au verre 2 selon la direction X. Lorsque les lunettes sont portées, la rainure 31 s'étend ainsi sensiblement à l'horizontal. La rainure 31 est par ailleurs conformée pour accueillir le crochet 15. Par exemple la rainure 31 présente une section en ovale, rectangulaire, oblongue ... (section de normale la direction X) afin de pouvoir réceptionner la portion d'attache 15a. La rainure 31 peut être débouchant à ses deux extrémités ou seulement à son extrémité associée au drageoir.

Dans le cas présent, la rainure 31 est ménagée le long de la face arrière 6 de la partie frontale 3.

Selon une alternative de cette première variante, la rainure 31 est ménagée le long de la face avant 5 de la partie frontale 3. On monte ainsi le tenon 11 par l'extérieur et non par l'intérieur comme ce qui a été précité en association avec les figures 4a et 4b.

La partie frontale 3 et/ou le logement 17 peut alors comporter une rainure additionnelle s'étendant entre la face avant 5 et la face arrière 6. La rainure additionnelle débouche au moins à l'une de ses extrémités dans la rainure 31. On peut ainsi par exemple avoir la première portion 12a enfoncée en partie ou en totalité dans cette rainure additionnelle.

On note que le crochet 15 n'a pas besoin d'être ici associé à un pion.

Par ailleurs, le logement 17 peut prendre une autre forme que celle décrite. Ainsi bien qu'ici le logement 17 présente une section fermée (section de normale la direction X), le logement 17 pourra présenter une section ouverte et être conformé en une rainure.

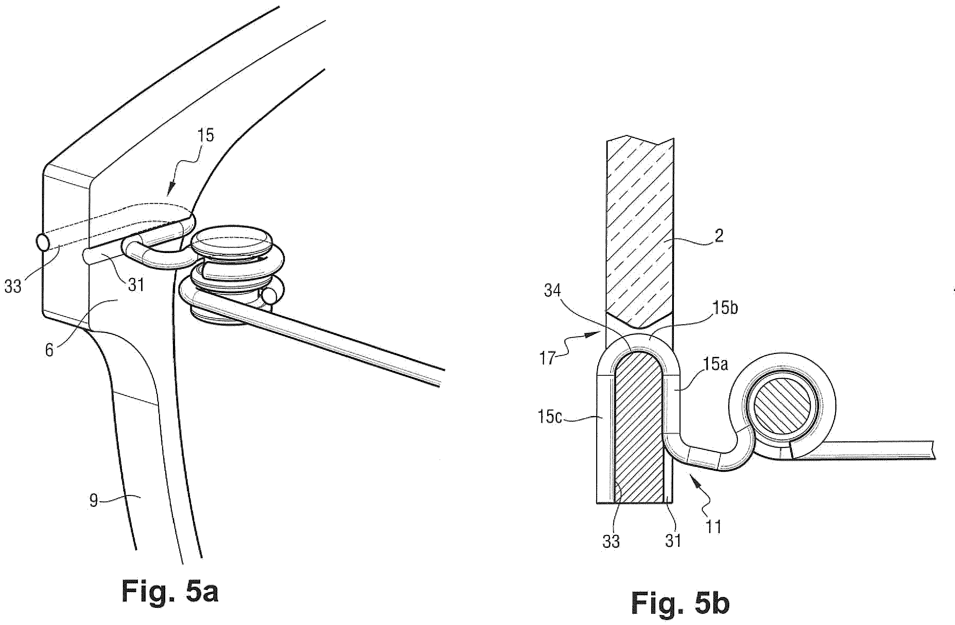

Ainsi, en référence aux figures 5a et 5b et selon une deuxième variante, le logement 17 comporte au moins une portion conformée en une rainure.

De façon particulière, le logement 17 comporte une première portion formant une rainure 31. La rainure 31 est ainsi ménagée pour s'étendre depuis l'extérieur de la monture 1 jusqu'à déboucher dans le drageoir (drageoir dans lequel est emboîté le verre 2 associé) de manière à être débouchant à ses deux extrémités. La rainure 31 s'étend sensiblement parallèlement au verre 2 selon la direction X. Lorsque les lunettes sont portées, la rainure 31 s'étend ainsi sensiblement à l'horizontal. La rainure 31 est par ailleurs conformée pour accueillir le crochet 15. Par exemple la rainure 31 présente une section en ovale, rectangulaire, oblongue ... (section de normale la direction X).

La rainure 31 est ici ménagée sur la face arrière 6 de la partie frontale 3.

Ainsi, le logement 17 comporte également ici au moins une deuxième portion conformée en une rainure 33. La rainure 33 est ainsi ménagée pour s'étendre depuis l'extérieur de la monture 1 jusqu'à déboucher dans le drageoir (drageoir dans lequel est emboîté le verre 2 associé) de manière à être débouchant à ses deux extrémités. La rainure 33 s'étend sensiblement parallèlement au verre 2 selon la direction X. Lorsque les lunettes sont portées, la rainure 33 s'étend ainsi sensiblement à l'horizontal. La rainure 33 est par ailleurs conformée pour accueillir le crochet 15. Par exemple la rainure 33 présente une section en ovale, rectangulaire, oblongue ... (section de normale la direction X).

La rainure 33 est ici ménagée sur la face avant 5 de la partie frontale 3.

Optionnellement, la rainure 31 et/ou la rainure 33 pourra n'être débouchant qu'à une seule de ses extrémités.

Par ailleurs, le logement 17 comporte une portion centrale s'étendant entre la rainure 31 et la rainure 33. Ladite portion centrale est également conformée en une rainure 34 ouverte sur le drageoir. La rainure 34 est ainsi ménagée pour s'étendre entre la face avant 5 et la face arrière 6 de manière à être débouchant à ses deux extrémités. La rainure 34 s'étend sensiblement perpendiculairement au verre 2 selon la direction Y. Lorsque les lunettes sont portées, la rainure 34 s'étend ainsi sensiblement à l'horizontal. La rainure 34 est par ailleurs conformée pour accueillir le crochet 15. Par exemple la rainure 34 présente une section en ovale, rectangulaire, oblongue ... (section de normale la direction X).

La rainure 34 est ici ménagée dans la face interne du bord latéral 9 soit au niveau du drageoir.

Ainsi, la portion d'attache 15a s'étend dans la rainure 31 ménagée le long de la face arrière 6. La portion d'attache 15a dépasse ou non en largeur et/ou en longueur de la rainure 31.

Le retour 15b s'étend dans la rainure 34. Le retour 15b dépasse ou non en largeur et/ou en longueur de la rainure 34. De préférence, le retour 15b et la rainure 34 sont conformés de sorte que le retour 15b ne s'étende pas dans le drageoir.

La jambe 15c s'étend dans la rainure 33. La jambe 15c dépasse ou non en largeur et/ou en longueur de la rainure 33.

On note qu'alors le crochet 15 s'étend dans un plan horizontal i.e. la jambe 15c et la portion d'attache 15a s'étendant sensiblement au même niveau parallèlement à la direction X.

On note que le crochet 15 n'a pas besoin d'être ici associé à un pion.

Selon une première alternative à cette deuxième variante, le logement 17 est conformé de sorte que la rainure 34 soit ménagée dans la face externe du bord latéral 9. Le retour 15b entoure alors extérieurement le bord latéral 9 et non intérieurement.

Selon une deuxième alternative à cette deuxième variante, le crochet 15 est agencé de sorte que la jambe 15c s'étende dans la rainure 31 et la portion d'attache 15a dans la rainure 33. On monte ainsi le tenon 11 par l'extérieur et non par l'intérieur comme ce qui a été précité.

Selon une troisième alternative à cette deuxième variante, le logement 17 comporte une quatrième portion conformée en une rainure s'étendant entre la rainure 31 et la rainure 33. On a alors une rainure ménagée extérieurement dans le bord latéral 9 et une rainure ménagée intérieurement dans le bord latéral 9. On peut ainsi par exemple avoir la deuxième portion 12b enfoncée en partie ou en totalité dans cette rainure supplémentaire.

Selon une quatrième alternative à cette deuxième variante, le logement 17 est conformé en une seule rainure mais la partie frontale comporte plusieurs logements conformés en rainures pour permettre un des agencements précités.

En outre, la première partie 12 (et donc son extrémité libre associée) peut être conformée différemment. La première partie 12 peut ainsi être de section circulaire, de section rectangulaire ... La première partie 12 peut être formée d'un fil (de section ronde ou rectangulaire par exemple) ou bien être plus épaisse et être formée d'une tôle par exemple.

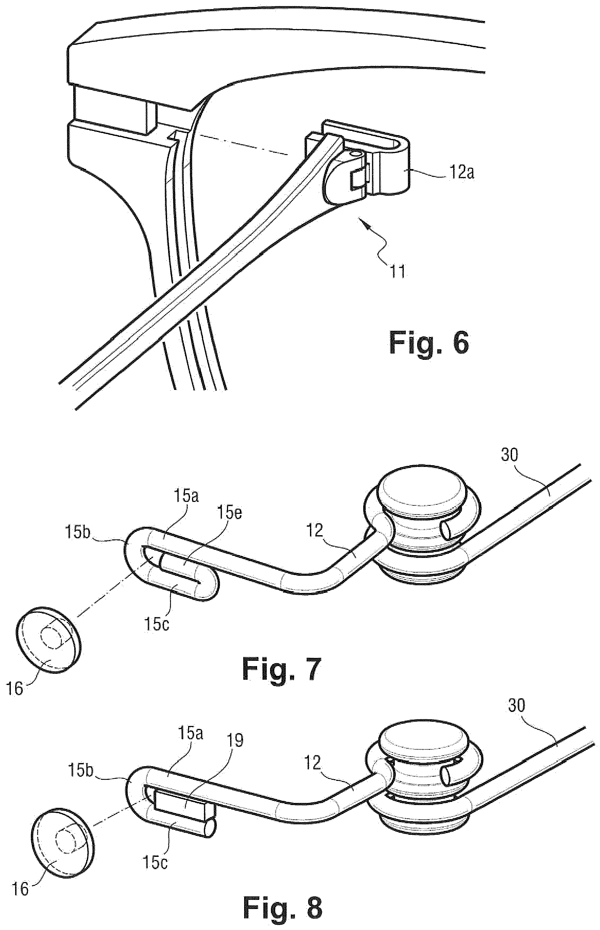

Ainsi comme illustré à la figure 6, et selon une troisième variante, la première partie 12a (et donc le crochet 15) peut être de section rectangulaire au lieu de circulaire et ce quelle que soit la forme générale du crochet.

Par ailleurs, le crochet 15 de la première partie 12 peut être de forme plus évoluée qu'un simple U.

Ainsi, selon une quatrième variante et comme illustré à la figure 7, la jambe 15c du crochet 15 est prolongée par un bras 15e formant un deuxième retour 15d du crochet 15. Ledit bras 15e s'étend ainsi en direction du premier retour 15b et à l'intérieur du crochet 15. De la sorte, le crochet 15 dessine un réceptacle fermé ou davantage fermé que pour la variante sans le bras de retour, réceptacle destiné à recevoir le pion 16.

Selon une cinquième variante illustrée à la figure 8, le crochet 15 forme encore un simple U mais comporte un doigt 19 de fermeture du crochet 15 qui est par exemple soudé au crochet 15 ou bien encore collé au crochet 15. Ledit doigt 19 s'étend ainsi en direction du retour du crochet 15 et à l'intérieur dudit crochet 15. De la sorte, le doigt 19 forme avec le crochet 15 un réceptacle fermé ou davantage fermé que pour la variante sans le doigt, réceptacle destiné à recevoir le pion 16.

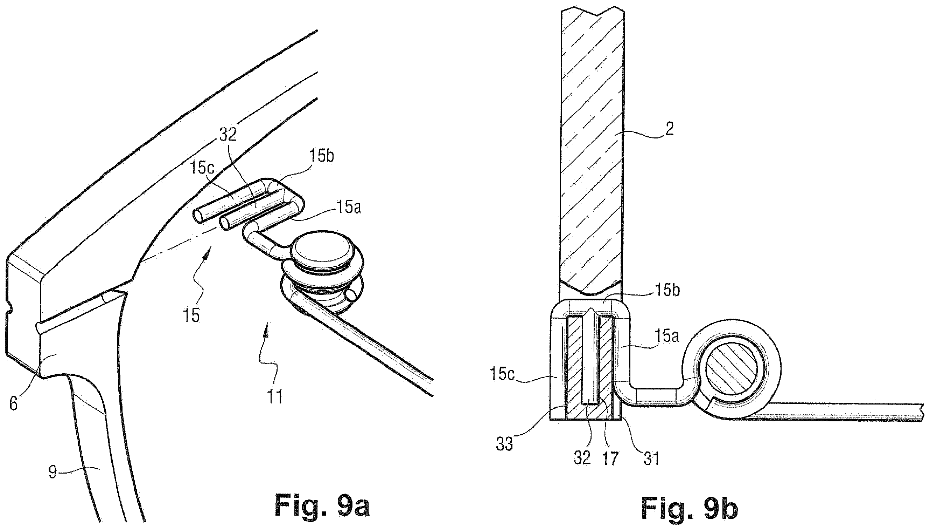

Selon une sixième variante illustrée aux figures 9a et 9b, le crochet 15 forme un peigne. A cet effet, le crochet 15 comporte au moins une dent 32 agencée entre la portion d'attache 15a et la jambe 15c. La dent 32 s'étend ici parallèlement à la portion d'attache 15a et la jambe 15c.

De façon particulière, seule la dent 32 peut être insérée dans le logement 17.

Le retour 15b entoure alors le bord latéral 9. La figure 9b illustre que le retour 15b entoure la face interne du bord latéral 9 mais alternativement le retour 15b pourra entourer la face externe du bord latéral 9.

Optionnellement, la portion d'attache 15a s'étend le long d'une face avant ou arrière de la partie frontale 3.

En remplacement et de préférence, la portion d'attache 15a s'étend dans une rainure 31 ménagée le long d'une face avant ou arrière de la partie frontale 3.

Dans le cas présent, la rainure 31 est ménagée le long de la face arrière 6 de la partie frontale 3.

La portion d'attache 15a dépasse ou non en largeur et/ou en longueur de la rainure 31.

Optionnellement, la jambe 15c s'étend le long d'une face avant ou arrière de la partie frontale 3.

En remplacement et de préférence, la jambe 15c s'étend dans une rainure 33 ménagée le long d'une face avant ou arrière de la partie frontale 3.

Dans le cas présent, la rainure 33 est ménagée le long de la face avant 5 de la partie frontale 3.

De préférence encore, la jambe 15c s'étend sur toute sa longueur dans la rainure 33. La jambe 15c dépasse ou non en largeur de la rainure 33. La jambe 15c dépasse ou non en longueur de la rainure 33.

On note qu'alors le crochet 15 s'étend dans un plan horizontal i.e. la jambe 15c, la portion d'attache 15a et la dent 32 s'étendant sensiblement au même niveau parallèlement à la direction X.

On note que le crochet 15 n'a pas besoin d'être ici associé à un pion.

La rainure 31 est ainsi ménagée pour s'étendre depuis l'extérieur de la monture 1 jusqu'à déboucher dans le drageoir (drageoir dans lequel est emboîté le verre 2 associé) de manière à être débouchant à ses deux extrémités. La rainure 31 s'étend sensiblement parallèlement au verre 2 selon la direction X. Lorsque les lunettes sont portées, la rainure 31 s'étend ainsi sensiblement à l'horizontal. La rainure 31 est par ailleurs conformée pour accueillir le crochet 15. Par exemple la rainure 31 présente une section en ovale, rectangulaire, oblongue ... (section de normale la direction X) afin de pouvoir réceptionner la portion d'attache 15a.

La rainure 33 est ainsi ménagée pour s'étendre depuis l'extérieur de la monture 1 jusqu'à déboucher dans le drageoir (drageoir dans lequel est emboîté le verre 2 associé) de manière à être débouchant à ses deux extrémités. La rainure 33 s'étend sensiblement parallèlement au verre 2 selon la direction X. Lorsque les lunettes sont portées, la rainure 33 s'étend ainsi sensiblement à l'horizontal. La rainure 33 est par ailleurs conformée pour accueillir le crochet 15. Par exemple la rainure 33 présente une section en ovale, rectangulaire, oblongue ... (section de normale la direction X) afin de pouvoir réceptionner la jambe 15c.

Optionnellement, la rainure 31 et/ou la rainure 33 pourra n'être débouchant qu'à une seule de ses extrémités.

Selon une alternative à cette sixième variante, le crochet 15 est agencé de sorte que la jambe 15c s'étende dans la rainure 31 et la portion d'attache 15a dans la rainure 33. On monte ainsi le tenon par l'extérieur et non par l'intérieur comme ce qui a été précité.

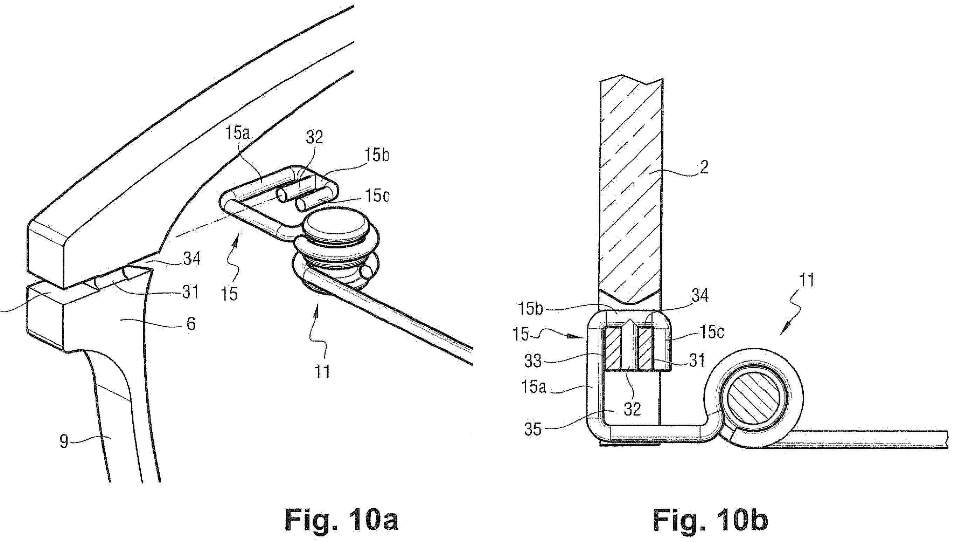

Une septième variante est illustrée aux figures 10a et 10b. Cette alternative est identique à ce qui a été dit pour la sixième variante à la différence que la partie frontale 3 et/ou le logement 17 comporte au moins une et de préférence deux rainures s'étendant chacune entre les rainures 31 et 33. L'une des rainures 34 est ménagée extérieurement dans le bord latéral 9 et l'autre des rainures 35 est ménagée intérieurement dans le bord latéral 9.

On peut ainsi par exemple avoir la deuxième portion 12b enfoncée en partie ou en totalité dans la rainure 35 et le retour 15b enfoncée en partie ou en totalité dans la rainure 34. Le retour 15b s'étend dans la rainure 34. Le retour 15b dépasse ou non en largeur et/ou en longueur de la rainure 34. De préférence, le retour 15b et la rainure 34 sont conformés de sorte que le retour 15b ne s'étende pas dans le drageoir.

Selon une huitième variante, le crochet 15 ne comporte pas de jambe 15c et forme ainsi une griffe. Optionnellement, la griffe peut comporter une ou plusieurs dents comme dans la variante où le crochet est conformé en peigne.

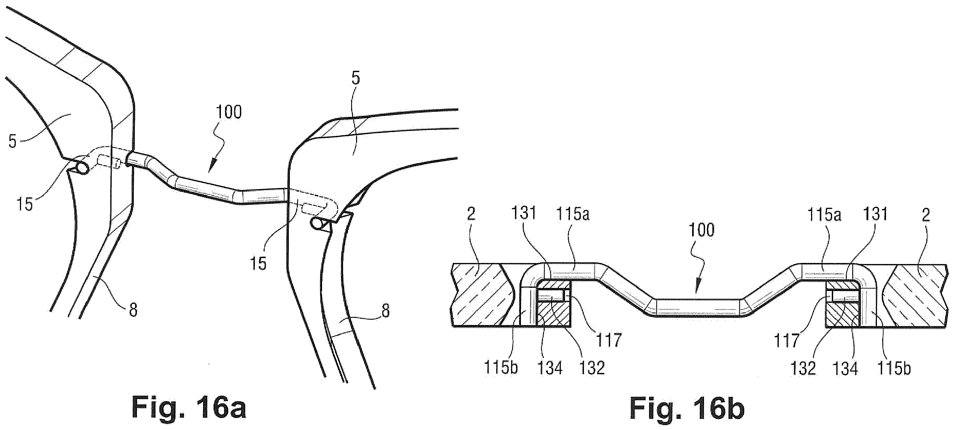

Une telle griffe est par exemple illustrée à la figure 16b pour un pontet mais peut tout aussi bien être appliquée dans le cas présent à un tenon.

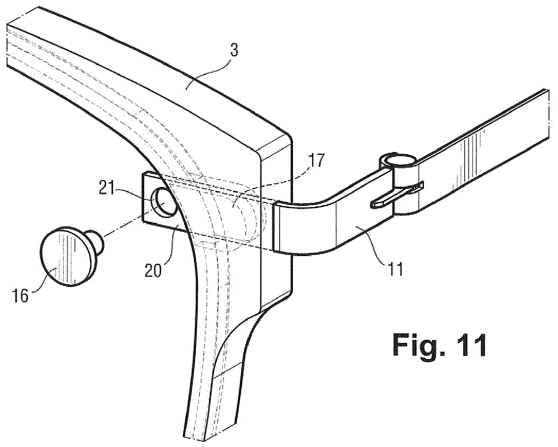

On peut également imaginer que l'extrémité libre ne soit pas conformée en un crochet 15. Ainsi et selon une neuvième variante illustrée à la figure 11, l'extrémité libre est par exemple conformée en une languette 20.

En outre, l'extrémité libre de la première partie 12 comporte un trou 21 pour la réception du pion 16. Ledit trou 21 s'étend sensiblement perpendiculairement à la languette 20. La languette 20 peut elle-même s'étendre horizontalement ou verticalement dans le logement 17. Le montage du tenon 11 dans la monture 1 est dès lors identique à celui du premier mode de réalisation.

On note que pour la mise en oeuvre de cette neuvième variante, l'extrémité libre de la première partie 12 doit être de suffisamment grandes dimensions pour autoriser le perçage d'un trou 21. L'extrémité libre est donc préférentiellement formée d'une tôle plutôt que d'un fil même si cette dernière version est envisageable pour des fils suffisamment épais.

En revanche la forme de l'extrémité libre de la première partie 12 importe peu à condition de pouvoir être percée. Dès lors d'autres formes d'extrémités libres sont envisageables comme une forme sphérique par exemple.

De la même façon, le pion 16 peut prendre une autre forme que celle décrite. Le pion 16 peut ainsi être conformé en une vis. De façon correspondante, l'extrémité libre de la première partie 12 peut comprendre un logement fileté pour faciliter la coopération entre la vis et le tenon. Dans le cas où le pion 16 n'est pas une vis, le logement de réception correspondant peut malgré tout être également fileté.

Le pion 16 peut également s'étendre parallèlement à l'extrémité libre du tenon 11 et non perpendiculairement à celle-ci c'est-à-dire que la tige 16a du pion 16 s'étend sensiblement selon la direction X comme la première partie. Dans ce cas, la tête 16b du pion 16 peut par exemple s'étendre partiellement ou en totalité dans le drageoir et s'appuyer contre le drageoir pour bloquer le tenon dans le logement correspondant ou bien encore peut prendre appui dans un logement adéquat.

Dans cette optique, on peut ainsi par exemple avoir une extrémité libre de première partie 12 qui présente un orifice fileté apte à recevoir un pion 16 sous forme de vis, le pion 16 étant vissé dans l'extrémité libre et la tête 16b du pion 16 venant en butée dans le logement pour maintenir le pion en place dans le logement.

En outre, bien qu'ici la charnière 14 soit agencée en extrémité de la première partie 12, la charnière pourra être agencée différemment et par exemple être agencée au niveau du retour 15b du crochet 15 (si l'extrémité libre de la première partie 12 est conformée en crochet). La figure 6 illustre à titre indicatif un tel rattachement.

Par ailleurs, les différentes propositions précitées du premier mode de réalisation peuvent bien sûr être mixées entre elles.

Ainsi, on pourra par exemple avoir un crochet conformé en peigne avec la dent présentant un orifice pour l'agencement d'un pion et/ou d'un orifice fileté pour l'agencement d'une vis.

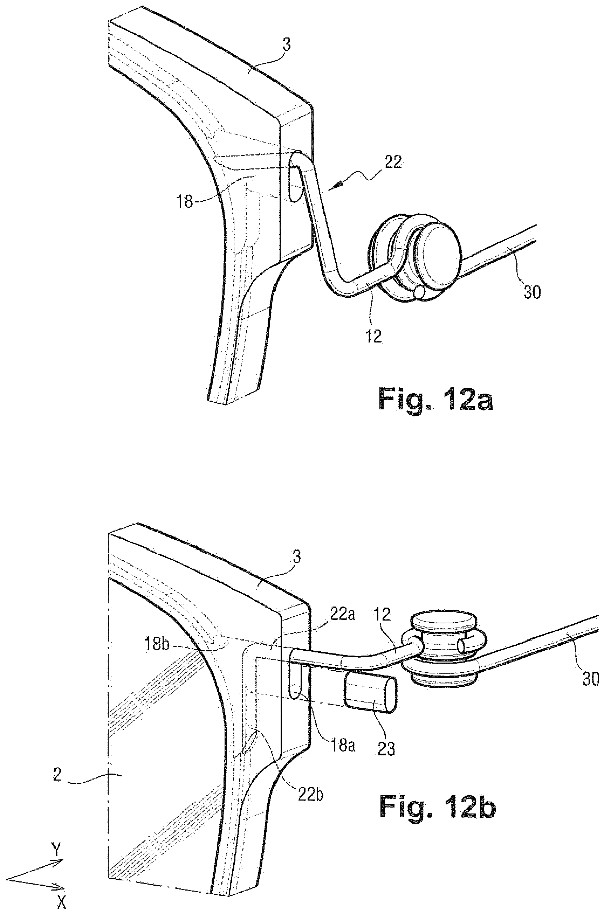

Un deuxième mode de réalisation de l'invention va être à présent décrit en référence aux figures 12a, 12b.

Dans ce deuxième mode de réalisation, l'extrémité libre est coudée. Typiquement l'extrémité libre est conformée en L. En particulier, l'extrémité libre forme sensiblement un coude à angle droit.

De manière correspondante, un logement 18 est ménagé dans le côté externe 9 de la partie frontale 2 en extrémité supérieure dudit côté externe 9. Le logement 18 est ainsi ménagé pour s'étendre depuis l'extérieur de la monture 1 jusqu'à déboucher dans le drageoir (drageoir dans lequel est emboîté le verre 2 associé) de manière à être débouchant à ses deux extrémités. Le logement 18 comprend une première portion 18a qui s'étend sensiblement parallèlement au verre selon la direction X (et donc sensiblement à l'horizontale lorsque les lunettes sont portées) et qui débouche dans une deuxième portion 18b s'étendant circonférentiellement sur une partie du drageoir. La deuxième portion 18b s'étend ainsi sensiblement à la verticale lorsque les lunettes sont portées.

Le logement 18 est conformé pour accueillir le coude 22 du tenon 11. Par exemple le logement 18 présente une section en ovale, rectangulaire, oblongue ... (section de normale la direction X) afin de pouvoir autoriser le passage du coude 22 à travers lui. Typiquement, le logement 18 est agencé verticalement lorsque les lunettes sont portées.

De la sorte, comme illustré à la figure 12a, avant le montage du verre, on vient insérer le coude 22 dans le logement 18 depuis l'extérieur de la partie frontale 3 vers l'intérieur de la partie frontale 3 en le faisant basculer.

En référence à la figure 12b, une fois le coude 22 dans le logement 18 (un des deux côtés 22a du coude s'étendant dans la première portion 18a du logement et l'autre 22b dans la deuxième portion 18b du logement de sorte que l'un des côtés 22a s'étende sensiblement à l'horizontale et l'autre des côtés sensiblement à la verticale), on vient monter le verre 2 dans les drageoirs, verrouillant ainsi le coude 22 dans la partie frontale 3, le coude 22 se trouvant coincé au niveau de son deuxième côté entre la partie frontale 3 et le verre 2.

De préférence, afin de limiter un basculement du tenon 11 dans le logement 18, on vient combler l'espace non occupé du logement 18 par le tenon 11 au niveau de l'extrémité supérieure du côté externe 9 de la partie frontale 3 à l'aide d'une cale 23. La cale 23 s'étend par exemple ici depuis le côté externe jusqu'à la jonction entre les deux côtés du coude 22 du tenon en comblant sensiblement tout le volume correspondant.

La cale 23 est en matière synthétique ou naturelle.

La cale 23 joue aussi ici un rôle d'anti-rotation.

De la sorte, le tenon 11 est monté dans la partie frontale 3 par insertion du tenon 11 dans le logement 18 selon un sens d'introduction parallèle au verre 2 (la direction X). D'ailleurs, l'extrémité libre d'attache du tenon 11 à la partie frontale 3 s'étend elle-même également parallèlement au verre 2.

Le montage du tenon 11 est ainsi simple et rapide. En outre, ce montage est réversible puisqu'il suffit de retirer le verre 2 et la cale 23 pour faire ressortir l'extrémité libre du logement 18.

Bien entendu différentes variantes au deuxième mode de réalisation sont envisageables.

La première partie 12 (et donc son extrémité libre associée) peut être conformée différemment. La première partie 12 peut ainsi être de section circulaire, de section rectangulaire ... La première partie 12 peut être formée d'un fil (de section ronde ou rectangulaire par exemple) ou bien être plus épaisse et être formée d'une tôle par exemple.

Le logement 18 peut être orienté différemment. Ainsi, bien qu'ici le logement 18 soit agencé à la verticale, le logement 18 peut être agencé à l'horizontale.

Par ailleurs, le coude 22 peut ne pas être perpendiculaire, les deux côtés du coude 22 s'étendant alors à l'oblique l'un de l'autre.

En outre l'extrémité libre de la première partie 12 peut être conformée différemment qu'en un coude 22.

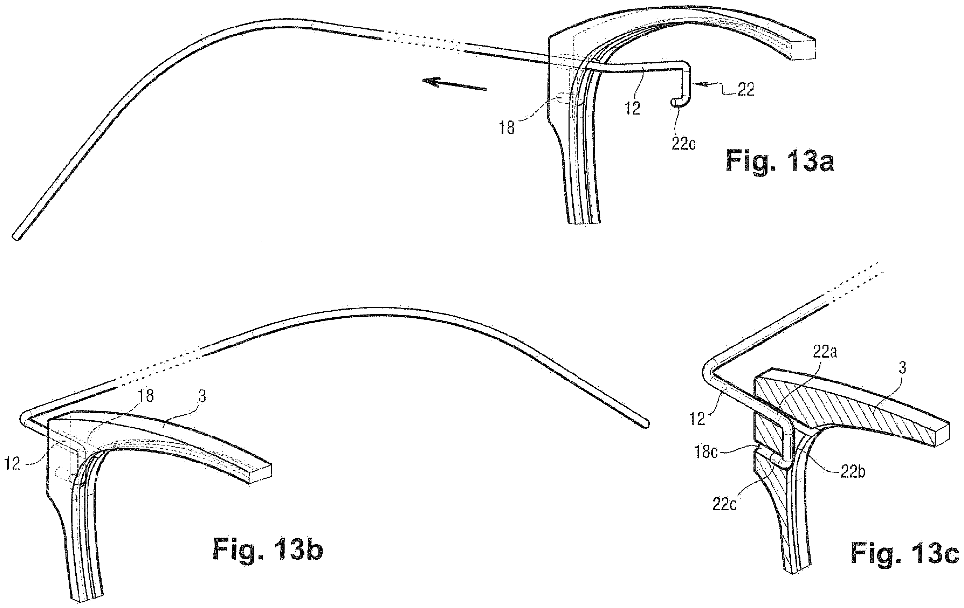

Selon une première variante et comme illustré aux figures 13a, 13b et 13c, le coude 22 est prolongé d'une jambe 22c formant un retour au coude 22. Ladite jambe 22c s'étend ainsi sensiblement parallèlement au premier côté 22a et perpendiculairement au deuxième côté 22b du coude 22. Le logement 18 comporte de façon correspondante une troisième portion 18c de réception de cette jambe 22c, troisième portion 18c qui s'étend donc ici parallèlement à la première portion 18a, la deuxième portion 18b reliant la première portion 18a et la troisième portion 18c.

On limite ainsi un basculement du tenon 11 dans le logement 18 de la partie frontale 3. On peut ainsi s'affranchir d'une cale ou bien combiner la cale et la jambe de retour pour limiter encore davantage le basculement.

Par ailleurs, si l'on souhaite utiliser une cale (que le coude 22 comporte une jambe de retour ou non) celle-ci pourra être montée côté interne et non côté externe.

On notera que dans cette première variante, le tenon et la branche sont en une seule pièce et que c'est la branche qui est introduite en premier dans le logement 18 depuis l'intérieur de la monture. Il est également possible de rentrer d'abord le tenon dans le logement 18 depuis l'extérieur de la monture en prévoyant si besoin un trou de passage un peu plus gros comme dans la figure 3a. Une cale pourra être utilisée pour immobiliser le tenon dans la monture si besoin.

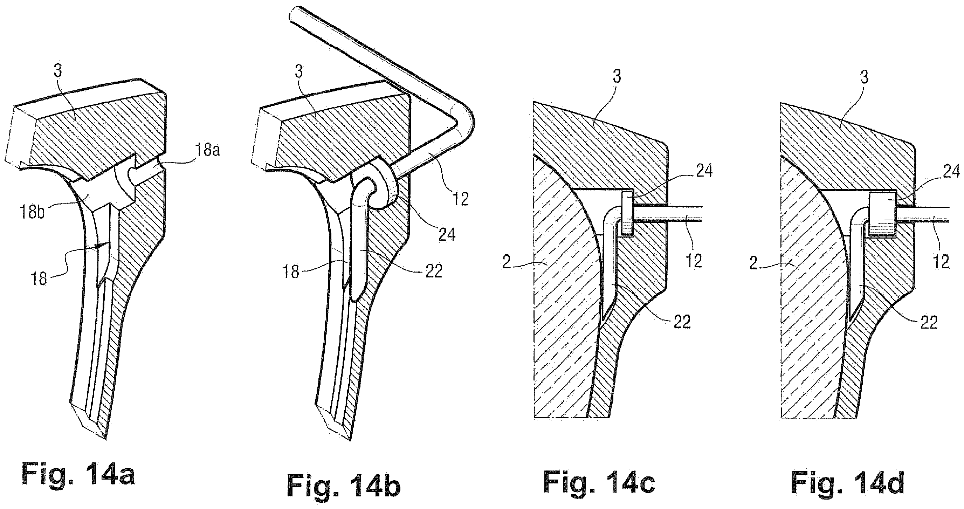

En référence aux figures 14a, 14b, 14c et selon une deuxième variante la cale 24 est creuse afin que le tenon 11 puisse s'étendre à travers elle. Plus précisément la cale 24 a ici une forme de rondelle. La deuxième portion 18b du logement 18 est seule dimensionnée pour recevoir ladite cale 24 (c'est-à-dire que son diamètre est sensiblement égal au diamètre externe de la cale 24), la première portion 18a du logement 18 étant de dimensions inférieures.

Ainsi en service, une fois le coude 22 inséré dans le logement 18, la cale 24 s'appuie à la jonction entre la première portion 18a et la deuxième portion 18b pour bloquer le tenon 11 dans le logement 18. La cale 24 joue aussi ici un rôle d'anti-rotation.

On peut soit avoir une cale 24 solidaire du tenon 11 soit une cale 24 qui est montée sur le tenon 11 une fois celui-ci déjà inséré ou pré-inséré dans le logement 18.

En variante, comme représenté sur la figure 14d, la cale peut par exemple prendre la forme d'une douille, éventuellement fendue afin de faciliter le passage de la partie coudée de l'extrémité libre à travers elle avant son introduction dans le logement 18. La cale peut aussi prendre la forme d'une vis ou d'un clou ou tout autre élément permettant de bloquer le tenon dans le logement 18.

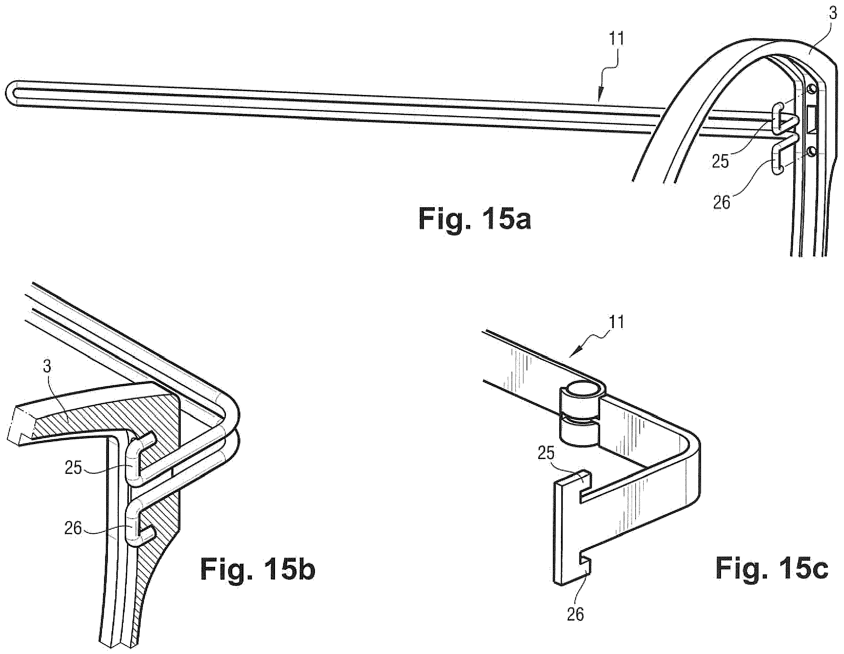

De la même façon et selon une troisième variante illustrée aux figures 15a et 15b, l'extrémité libre comporte deux coudes 25, 26 de manière que l'un s'étende vers le haut et l'autre s'étende vers le bas lorsque le tenon 11 est en place dans le logement 18.

Les deux coudes 25, 26 peuvent être accolés ou séparés l'un de l'autre.

Dans la version représentée sur les figures 15a et 15b, la branche et le tenon sont formés d'une seule pièce à partir d'un fil métallique recourbé pour avoir deux tronçons principaux s'étendant parallèlement l'un à l'autre, les tronçons principaux étant reliés l'un à l'autre par un tronçon intermédiaire coudé formant l'extrémité libre de la branche. Les tronçons principaux ont, à l'opposé du tronçon intermédiaire coudé, une extrémité libre recourbée en crochet pour former les coudes 25, 26 ici prolongés par des jambes de retour dont les extrémités sont engagées dans deux perçages s'étendant parallèlement au logement 18 de part et d'autre du débouché de celui-ci dans la partie intérieure de la partie frontale 3.

On limite ainsi un basculement du tenon 11 dans le logement 18 de la partie frontale 3. On peut ainsi s'affranchir d'une cale et de jambes de retour. On peut aussi combiner cale et/ou jambe (s) de retour avec le double-coude pour limiter encore davantage le basculement.

Optionnellement un seul des coudes est prolongé par une jambe de retour, ou aucun des coudes 25, 26 ne l'est.

Dans la version de la figure 15c, le tenon et la branche sont réalisés à partir d'une lame plate en métal ou en matière plastique ayant une extrémité, formant tenon, qui est conformée en T pour former les coudes 25, 26.La branche et le tenon peuvent être d'une seule pièce ou bien en deux pièces reliées l'une à l'autre de manière rigide ou articulée.

Bien entendu le logement 18 est conformé de manière adaptée pour recevoir les deux coudes 25, 26.

Par ailleurs, le logement 18 peut prendre une autre forme que celles décrites. Selon une quatrième variante, le logement 18 peut ne comporter que la première portion horizontale et éventuellement la troisième portion de retour des jambes (il n'y a alors pas de deuxième portion dédiée au niveau du drageoir, le coude étant simplement coincé entre le verre et la partie frontale).

Par ailleurs, les différentes propositions précitées du deuxième mode de réalisation peuvent être mixées entre elles.

On peut également mixer l'une des propositions du premier mode de réalisation avec l'une des propositions du deuxième mode de réalisation.

Un troisième mode de réalisation de l'invention va être à présent décrit.

Alors que les différentes propositions de montage du premier mode de réalisation et du deuxième mode de réalisation étaient appliquées au tenon 11, toutes les propositions précitées peuvent s'appliquer à un autre élément de lunettes comme par exemple un pontet 100 c'est-à-dire une partie reliant l'une à l'autre les deux portions de la partie frontale 3 portant les verres.

Pour ce troisième mode de réalisation, le pontet 100 qui va être décrit peut être d'une seule pièce avec un porte-plaquettes ou bien peut-être fixé au porte-plaquettes par exemple par soudure.

Pour ce troisième mode de réalisation, par exemple, l'une ou les deux portions du pontet 100 d'attache à la partie frontale 3 est conformée en un crochet 115.

En référence aux figures 16a et 16b, et selon une première variante, le crochet 115 forme une griffe. Le crochet 115 comporte ici une portion d'attache 115a à la partie centrale du pontet 100, portion d'attache 115a prolongée d'un retour 115b, et au moins une dent 132 agencée entre la portion d'attache 115a et le retour 115b. La dent 132 s'étend ici parallèlement à la portion d'attache 115a dans le logement 117. Ledit logement 117 s'étend sensiblement selon la direction X dans la zone de partie frontale 3 destinée à être positionnée sur le nez d'un utilisateur.

Le retour 115b entoure alors le bord intérieur 8. La figure 16b illustre que le retour 115b entoure la face interne du bord inférieur 8 (i.e. côté drageoir) mais alternativement le retour 115b pourra entourer la face externe du bord inférieur 8.

Optionnellement, la portion d'attache 115a s'étend le long d'une face avant 5 ou arrière 6 de la partie frontale 3.

En remplacement et de préférence, la portion d'attache 115a s'étend dans une rainure 131 ménagée le long d'une face avant ou arrière de la partie frontale 3.

Dans le cas présent, la rainure 131 est ménagée le long de la face arrière 6 de la partie frontale 3.

La portion d'attache 115a dépasse ou non en largeur et/ou en longueur de la rainure 131.

On note qu'alors le crochet 115 s'étend dans un plan horizontal i.e. la portion d'attache 115a et la dent 132 s'étendant sensiblement au même niveau parallèlement à la direction X.

Optionnellement la partie frontale 3 et/ou le logement 117 comporte au moins une rainure 134 s'étendant entre la face avant 5 et la face arrière 6. La rainure 134 est ménagée intérieurement dans la partie frontale i.e. au niveau du drageoir.

On peut ainsi par exemple avoir le retour 115b enfoncée en partie ou en totalité dans la rainure 134. Le retour 115b s'étend dans la rainure 134. Le retour 115b dépasse ou non en largeur et/ou en longueur de la rainure 134. De préférence, le retour 115b et la rainure 134 sont conformés de sorte que le retour 115b ne s'étende pas dans le drageoir.

Selon une deuxième alternative, la rainure 131 est ménagée le long de la face avant 5 de la partie frontale 3. On monte ainsi le pontet 100 par l'extérieur et non par l'intérieur comme dans la première variante.

Selon une troisième alternative, la partie frontale 3 et/ou le logement 117 comporte au moins une rainure 131 s'étendant sur la face arrière et une rainure 133 s'étendant sur la face avant.

Le crochet 115 peut prendre une autre forme que celle de la première variante.

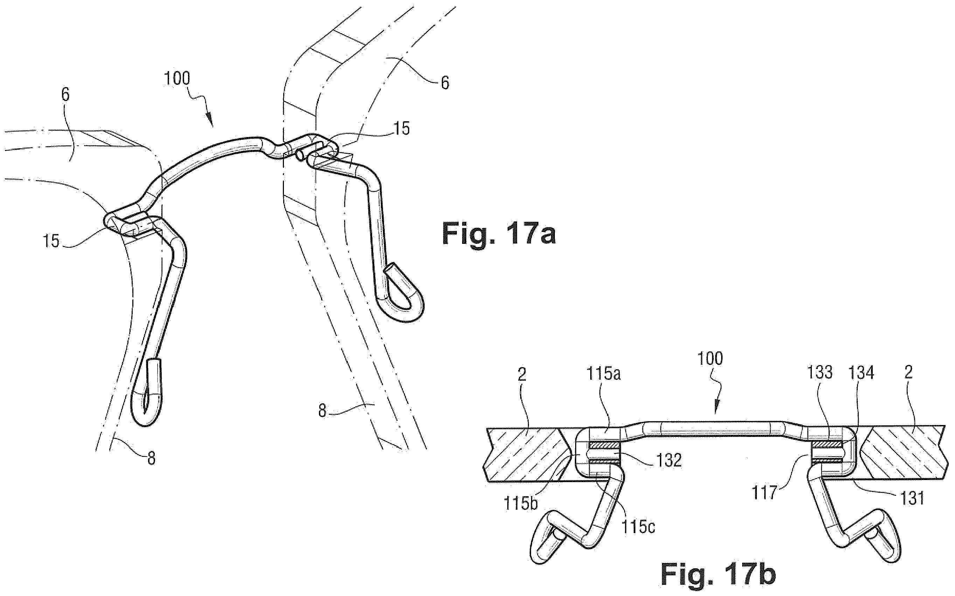

Ainsi, selon une deuxième variante, en référence aux figures 17a et 17b, la partie frontale 3 comporte au moins une rainure 131 s'étendant sur la face arrière, une rainure 133 s'étendant sur la face avant et une rainure 134 s'étendant entre la rainure 131 et la rainure 133, la rainure 134 étant ménagée intérieurement dans la partie frontale 3 i.e. au niveau du drageoir. Le logement 117 s'étend quant à lui selon la direction X de sorte à déboucher au moins à une extrémité dans la rainure 134.

Le crochet 115 est ici conformé en un peigne et comporte ici une portion d'attache 115a à la partie centrale du pontet 100, portion d'attache 115a prolongée d'une jambe 115c, un retour 115b reliant la portion d'attache 115a à la jambe 115c. Le crochet 115 comportant par ailleurs au moins une dent 132. La dent 132 s'étend ici parallèlement à la portion d'attache 115a et à la jambe 115c.

De façon particulière, seule la dent 132 peut être insérée dans le logement 117.

Le retour 115b entoure entièrement le bord inférieur 8. On peut ainsi par exemple avoir le retour 115b enfoncée en partie ou en totalité dans la rainure 134. Le retour 115b s'étend dans la rainure 134. Le retour 115b dépasse ou non en largeur et/ou en longueur de la rainure 134. De préférence, le retour 115b et la rainure 134 sont conformés de sorte que le retour 115b ne s'étende pas dans le drageoir.

La portion d'attache 115a s'étend ici dans la rainure avant 133 et la jambe 115c s'étend dans la rainure arrière 131.

La portion d'attache 115a dépasse ou non en largeur et/ou en longueur de la rainure 133. La jambe 115c dépasse ou non en largeur et/ou en longueur de la rainure 131.

On note qu'alors le crochet 115 s'étend à l'horizontal i.e. la portion d'attache 115a et la dent 132 s'étendant sensiblement au même niveau parallèlement à la direction X.

Selon une alternative, la jambe 115c est agencée dans la rainure avant 133 et la portion d'attache 115a dans la rainure arrière 131. On monte ainsi le pontet 100 par l'extérieur et non par l'intérieur comme dans la deuxième variante.

De la même manière, le logement 117 peut prendre une autre forme que celle décrite. Ainsi bien qu'ici le logement 117 présente une section fermée (section de normale la direction X), le logement 117 pourra présenter une section ouverte et ainsi être conformé en une rainure.

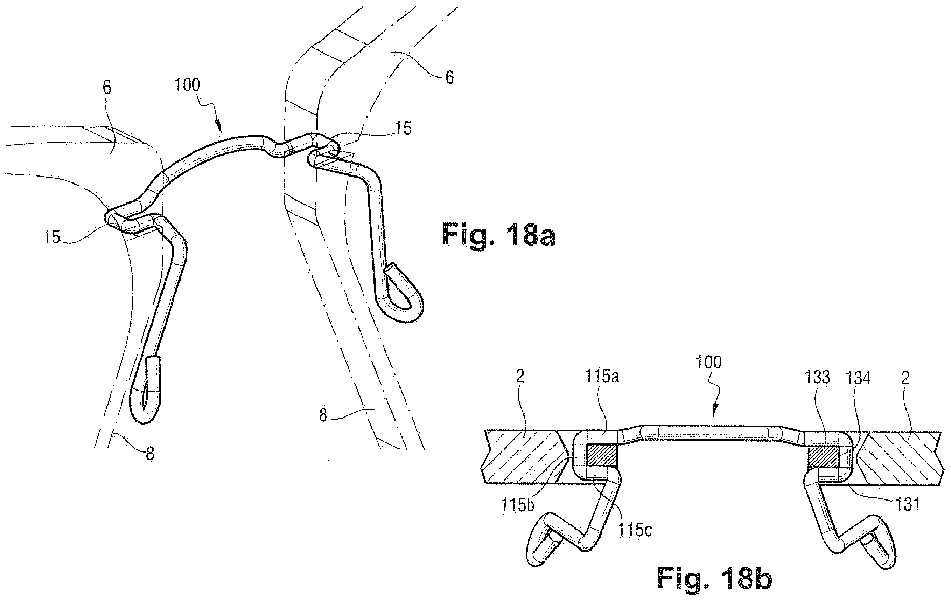

Par ailleurs, selon une troisième variante illustrée aux figures 18a et 18b, le crochet 115 peut ne pas comporter de dent.

En outre, le logement 117 peut prendre une autre forme que celle décrite. Ainsi bien qu'ici le logement 117 présente une section fermée (section de normale la direction X), le logement 117 pourra présenter une section ouverte et ainsi être conformé en une rainure.

La figure 18b illustre ainsi une troisième variante, dans laquelle le logement comporte une première portion conformé en une rainure 131, une deuxième portion conformée en une rainure 133 et une troisième portion conformée en une rainure 134.

Ainsi, la rainure 131 s'étend sur la face arrière 6, la rainure 133 s'étend sur la face avant 5 et la rainure 134 s'étend entre la rainure 131 et la rainure 133, la rainure 134 étant ménagée intérieurement dans la partie frontale 3 i.e. au niveau du drageoir.

Le retour 115b entoure entièrement le bord intérieur 8. On peut ainsi par exemple avoir le retour 115b enfoncée en partie ou en totalité dans la rainure 134. Le retour 115b s'étend dans la rainure 134. Le retour 115b dépasse ou non en largeur et/ou en longueur de la rainure 134. De préférence, le retour 115b et la rainure 134 sont conformés de sorte que le retour 115b ne s'étende pas dans le drageoir.

La portion d'attache 115a s'étend ici dans la rainure avant 133 et la jambe 115c s'étend dans la rainure arrière 131.

La portion d'attache 115a dépasse ou non en largeur et/ou en longueur de la rainure 133. La jambe 115c dépasse ou non en largeur et/ou en longueur de la rainure 131.

On note qu'alors le crochet 115 s'étend à l'horizontal i.e. la portion d'attache 115a et la dent 132 s'étendant sensiblement au même niveau parallèlement à la direction X.

Selon une alternative, la jambe 115c est agencée dans la rainure avant 133 et la portion d'attache 115a dans la rainure arrière 131. On monte ainsi le pontet 100 par l'extérieur et non par l'intérieur comme ce qui a été précité.

Bien entendu, les différentes propositions précitées du troisième mode de réalisation peuvent être mixées entre elles.

On peut également mixer l'une des propositions du premier mode de réalisation et/ou l'une des propositions du deuxième mode de réalisation avec l'une des propositions du troisième mode de réalisation.

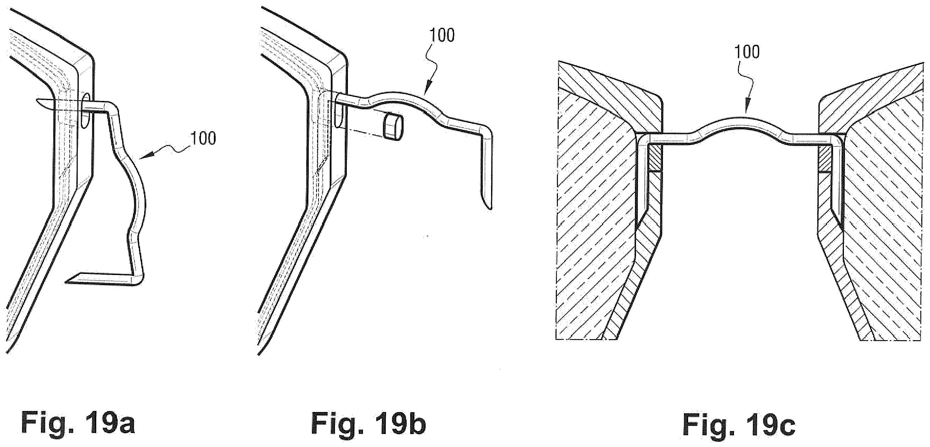

Les figures 19a à 19c illustrent ainsi un montage correspondant à celui du deuxième mode de réalisation, avec cale et extrémité coudée, mais appliqué au pontet 100.

Bien entendu, l'invention n'est pas limitée aux modes de réalisation décrits mais englobe toute variante entrant dans le champ de l'invention telle que définie par les revendications.

La monture sera telle qu'elle permettra un montage réversible de l'élément de lunettes dans la partie frontale. De même elle devra permettre un blocage de l'élément de lunettes dans la partie frontale par le verre de la monture.

Bien qu'ici les exemples décrits soient appliqués à l'un des côtés de la partie frontale, les exemples décrits pourront bien entendu être appliqués à l'autre des côtés de la partie frontale.

Par exemple, bien qu'ici le crochet du premier mode de réalisation soit arrondi, ledit crochet pourra être conformé différemment est par exemple former une boucle carrée ou rectangulaire.

Par ailleurs, l'élément de lunettes pourra être monté indifféremment de l'extérieur vers l'intérieur de la partie frontale ou de l'intérieur vers l'extérieur de la partie frontale pour toutes les propositions.

Le logement et/ou la partie frontale sera alors conformé de manière correspondante pour que l'élément de lunettes puisse être positionné. Les figures 13a à 13c illustrent ainsi une possibilité de montage par l'intérieur mais bien entendu ce montage est applicable aux autres propositions décrites ici (et les figures 13a et 13c pourront être appliquées à un montage par l'extérieur avec un logement adapté).

Le logement pourra avoir une autre forme que celle décrite et être par exemple circulaire ou bien encore en T. Le logement pourra avoir sensiblement une section de mêmes dimensions que celles de la partie d'extrémité de l'élément de lunettes insérée dans le logement ou être de dimensions plus importantes (par exemple dans le cas où l'élément de lunettes doit être basculé ou dans le cas où l'extrémité libre de l'élément de lunettes est prolongée d'un crochet devant aussi loger dans le logement).

Chaque logement et/ou chaque rainure pourra ne pas être débouchant à ses deux extrémités mais seulement à une extrémité comme celle atteignant le drageoir.

De préférence, et pour toutes les propositions précitées, le logement sera tel qu'il logera l'élément de lunettes hors de la zone d'attache des verres au drageoir afin d'éviter d'abîmer les verres (typiquement le logement comportera une portion dédiée ménagée extérieurement au drageoir pour loger l'élément de lunettes afin que l'élément de lunettes ne s'étende pas dans le drageoir lui-même, cette portion dédiée étant par exemple une rainure). On pourra si besoin ajouter une surépaisseur externe à la partie frontale afin d'avoir une longueur de logement suffisante pour loger l'élément de lunettes sans qu'il ne dépasse ou très peu dans le drageoir. L'élément de lunettes ne touchera de préférence pas ou peu le verre.

L'élément de lunettes pourra être différent de ce qui a été décrit et être par exemple formé d'un fil replié sur lui-même. On conformera alors l'extrémité libre du fil pour pouvoir y agencer un pion comme dans le premier mode de réalisation ou pour présenter au moins une portion d'attache dédiée (comme un coude) comme dans le deuxième mode de réalisation.

On pourra avoir de la même façon un élément de lunettes double et non simple : la partie frontale comportera alors de manière correspondante deux logements, à chaque logement étant associé des moyens de fixation de l'élément de lunettes correspondant. Les figures 15a et 15b illustrent ainsi ici une possibilité de montage par double tenons.

L'élément de lunettes et/ou la branche pourront être dans différentes matières comme en matière synthétique, en matière plastique, en matière métallique, en bois, bambou, carton ou autre...

L'élément de lunettes peut être formée d'un ou plusieurs fils (de section ronde ou rectangulaire par exemple) et/ou d'un élément plus épais comme une ou plusieurs tôles par exemple et/ou d'un élément creux comme une douille filetée et/ou d'un élément non lisse présentant par exemple un filetage externe. Dans le cas d'un élément de lunettes présentant un crochet celui-ci pourra par exemple être formé d'un fil et sa dent éventuelle dans une tôle ou inversement. Dans le cas d'un élément de lunettes présentant un crochet celui-ci pourra être plein et sa dent éventuelle être une douille filetée apte à recevoir une vis pour assurer une fixation supplémentaire de l'élément de lunettes dans la partie frontale.

De la même manière la partie frontale pourra être dans différentes matières comme en matière synthétique, en matière plastique, en matière métallique, en bois, bambou, carton ou autre...

La partie frontale pourra être en un ou plusieurs éléments.

La partie frontale pourra entourer extérieurement le ou les verres ou bien n'entourer que partiellement le ou les verres. Ainsi le ou les drageoirs correspondants pourront ne pas être fermés.

La monture de lunettes pourra ne comporter qu'un seul verre. D'autres éléments de lunettes que le pontet ou le tenon pourront être utilisés pour mettre en oeuvre l'invention comme par exemple un porte-plaquettes d'une monture dans laquelle la partie frontale est d'un seul tenant. Typiquement on pourra insérer le porte-plaquettes dans un logement conformé en une rainure ménagée sur une face avant ou arrière du pontet de la partie frontale et prolongée à ses deux extrémités par deux rainures transversales, les deux verres permettant d'assurer le blocage du porte-plaquettes dans ce logement.

## Revendications

1. Monture de lunettes comprenant une partie frontale (3) portant au moins un verre (2), la monture comprenant par ailleurs au moins un élément de lunettes qui est monté sur la partie frontale, la monture étant **caractérisée en ce que** l'élément de lunettes est monté sur la partie frontale par insertion de l'élément de lunettes dans un logement de la partie frontale selon un sens d'introduction parallèle au verre, le verre assurant un blocage de l'élément de lunettes dans la partie frontale.

2. Monture de lunettes selon la revendication 1, dans laquelle le logement est agencé de sorte que l'élément de lunettes s'étende hors de la zone d'attache des verres au drageoir.

3. Monture de lunettes selon la revendication 1 ou la revendication 2, dans laquelle l'élément de lunettes est inséré dans le logement et bloqué par le verre uniquement par emboitement.

4. Monture de lunettes selon l'une des revendications précédentes, dans laquelle l'élément de lunettes est un tenon (11) ou un pontet (100).

5. Monture de lunettes selon l'une des revendications précédentes, dans laquelle une portion de l'élément de lunettes est conformée en un crochet (15, 115).

6. Monture de lunettes selon la revendication 5, dans laquelle le crochet (15, 115) forme un peigne avec au moins une dent.

7. Monture de lunettes selon la revendication 5 ou la revendication 6, dans laquelle le crochet (15, 115) est agencé en partie seulement dans le logement.

8. Monture de lunettes selon la revendication 5 ou la revendication 6 ou la revendication 7, dans laquelle le crochet (15, 115) est agencé de sorte à s'étendre dans un plan horizontal lorsque le crochet est placé dans le logement.

9. Monture de lunettes selon l'une des revendications précédentes, dans laquelle une portion de l'élément de lunettes est conformée pour être bloquée dans la partie frontale sans pion de blocage.

10. Monture de lunettes selon l'une des revendications précédentes, dans laquelle une portion de l'élément de lunettes est conformée en un coude (22).

11. Monture de lunettes selon l'une des revendications précédentes, dans laquelle l'élément de lunettes est conformé pour être monté par l'extérieur de la partie frontale.

12. Monture de lunettes selon l'une des revendications 1 à 10, dans laquelle l'élément de lunettes est conformé pour être monté par l'intérieur de la partie frontale.
